# EUROPEAN PATENT SPECIFICATION

(11) **EP 3 774 930 B1**
(45) Date of publication and mention of the grant of the patent: **20.10.2021**
(21) Application number: 19730797.8
(22) Date of filing: 19.06.2019
(51) Int. Cl.: C08F 2/00, C08F 210/16, C08F 2/01, C08F 2/14, C08F 10/02, C08F 6/24

(54) **SUSPENSION PROCESS FOR PREPARING ETHYLENE COPOLYMERS IN A REACTOR CASCADE**
SUSPENSIONSVERFAHREN ZUR HERSTELLUNG VON ETHYLENCOPOLYMEREN IN EINER REAKTORKASKADE
PROCÉDÉ DE SUSPENSION DE PRÉPARATION DE COPOLYMÈRES D'ÉTHYLÈNE DANS UNE CASCADE DE RÉACTEURS

(30) Priority: 21.06.2018 EP 18179141
(43) Date of publication of application: 17.02.2021
(73) Proprietor: Basell Polyolefine GmbH, 50389 Wesseling (DE)
(72) Inventor: DAMM, Elke, 61118 Bad Vilbel (DE); KUEHL, Reinhard, 53332 Bornheim (DE); CARVAJAL, Rodrigo, 53175 Bonn (DE)
(74) Representative: LyondellBasell
(86) International application number: PCT/EP2019/066121
(87) International publication number: WO 2019/243384

(56) References cited:
- EP-A1- 0 905 151
- EP-A1- 1 041 090
- WO-A2-2013/154907
- US-A1- 2014 171 603
- US-B1- 6 204 345

## Description

### FIELD OF THE INVENTION

The present disclosure provides a process for preparing a multimodal ethylene copolymer in suspension in a reactor cascade. The present disclosure especially provides a process for preparing a multimodal ethylene copolymer in suspension in a reactor cascade in which a suspension of multimodal ethylene copolymer particles formed in the reactor cascade is transferred into a separator and separated into multimodal ethylene copolymer particles and recovered suspension medium, a part of the recovered suspension medium is purified in a purification section for producing purified components of the recovered suspension medium, and at least some or a part of the purified components of the recovered suspension medium are recycled to the first polymerization reactor of the reactor cascade.

### BACKGROUND OF THE INVENTION

Processes for preparing ethylene copolymers in suspension in a reactor cascade are established methods for producing ethylene polymers and, for example, disclosed in EP 0 905 152 A1 or WO 2012/028591 A1. Such processes allow to set different reaction conditions in the polymerization reactors and thereby to produce different polymer compositions in the individual polymerization reactors. Accordingly produced multimodal ethylene copolymers are characterized by having, for example, a good combinations of product properties and processability. Suspension processes for preparing ethylene polymers commonly employ a hydrocarbon or a hydrocarbon mixture as diluent. The suspension medium, which forms the liquid or supercritical phase of the suspension, however comprises, besides the diluent as main component, also further components like dissolved ethylene, comonomers, aluminum alkyls, and hydrogen and dissolved reaction products like oligomers and waxes. Principles of producing multimodal ethylene copolymer in suspension in a reactor cascade are, e.g., disclosed in F. Alt et al., Macromol. Symp. 2001, 163, 135-143.

It is well known that the polymer properties of the produced ethylene copolymers not only depend on parameters such as the molecular weight distribution or the comonomer content but also on the incorporated comonomer. With increasing comonomer chain length, product properties such as film performance or environmental stress crack resistance (ESCR) commonly increase. Nonetheless, ethylene copolymers having a relatively short chain comonomer such as ethylene/1-butene copolymers are still commercially important polymers.

For being able to operate an ethylene polymerization process commercially successful, it is needed that non-reacted monomers which are discharged from the polymerization reactor together with the produced polymer are recycled to the polymerization process. In suspension polymerization processes, also the other components of the suspension medium need to be recycled as economically as possible. It is hence an option to directly recycle the suspension medium without separating the components. However, for producing multimodal ethylene copolymers having good mechanical properties such as a high ESCR, it is often needed that one of the polymerizations in one of the polymerization reactors is an ethylene homopolymerization. That means, all streams which are fed to such a polymerization reactor have to be devoid of comonomers. A common method for removing unwanted components of a liquid composition from the mixture is distillation. However, for being able to perform an effective separation by distillation in an economic manner, the boiling points of the components have to be far enough apart.

Accordingly, common technologies for preparing ethylene polymers in suspension employ specific combinations of comonomer and diluent. Commercially used combinations are, for example, 1-hexene as comonomer and iso-butane as diluent or 1-butene as comonomer and hexane as diluent. However, these technologies do not allow for the incorporation of comonomers which have a boiling point very similar to the boiling point of the diluent for producing ethylene copolymers having an ethylene homopolymer component in one polyethylene production facility under respectively economically favorable conditions.

There is accordingly a need to overcome the disadvantages of the prior art and to provide a process, which allows producing multimodal ethylene copolymers having a good combination of product properties and processability in a reactor cascade with comonomers of any boiling point and nonetheless allows an economic recycling of the components of the suspension medium to the reactors of the reactor cascade.

### SUMMARY OF THE INVENTION

The present disclosure provides a process for preparing a multimodal ethylene copolymer in suspension in a reactor cascade comprising a first polymerization reactor and one or more subsequent polymerization reactors comprising,
polymerizing, in the reactor cascade, ethylene and one or more C₃-C₁₂-1-alkenes at temperatures of from 40 to 150°C and pressures of from 0.1 to 20 MPa in the presence of a polymerization catalyst and forming a suspension of multimodal ethylene copolymer particles in a suspension medium comprising a diluent,
transferring the suspension of multimodal ethylene copolymer particles into a separator, in which the suspension is separated into multimodal ethylene copolymer particles and recovered suspension medium,
purifying a part of the recovered suspension medium in a purification section for producing purified components of the recovered suspension medium, and
recycling at least some or a part of the purified components of the recovered suspension medium to the first polymerization reactor of the reactor cascade,
wherein the purified components of the recovered suspension medium recycled to the first polymerization reactor, which comprise the diluent, undergo a catalytic hydrogenation before being introduced into the first polymerization reactor.

In some embodiments, the purified components of the recovered suspension medium, which are recycled to the first polymerization reactor, amount to from 5 to 70 wt.-% of the recovered suspension medium.

In some embodiments, an ethylene homopolymer is prepared in the first polymerization reactor and a copolymer of ethylene is prepared in a subsequent polymerization reactor.

In some embodiments, the difference between the normal boiling point of one of the comonomers fed to the reactor cascade and the normal boiling point of the diluent or, if the diluent is a mixture of components, the difference the between the normal boiling point of one of the comonomers fed to the reactor cascade and the initial normal boiling point or the final normal boiling point of the diluent is not more than 15°C, the normal boiling points being defined as boiling points at 1013,25 hPa.

In some embodiments, the multimodal ethylene copolymer is an ethylene-1-hexene copolymer.

In some embodiments, the multimodal ethylene copolymer comprises at least two comonomers.

the multimodal ethylene copolymer comprises at least 1-hexene and 1-butene as comonomers.

In some embodiments, a part of the recovered suspension medium is directly recycled to a subsequent polymerization reactor.

In some embodiments, the process for producing the purified part of the recovered suspension medium includes a step of evaporating a part of the recovered suspension medium and then re-condensing the evaporated part of the suspension medium.

In some embodiments, the process for producing the purified part of the recovered suspension medium includes a distillation step.

In some embodiments, the process for producing the purified components of the recovered suspension medium includes a step of wax removal.

In some embodiments, the suspension of polyethylene particles withdrawn from the first polymerization reactor of the reactor cascade is fed into a separator, in which a part of the suspension medium is separated from the suspension and recycled to the first polymerization reactor of the reactor cascade and a concentrated suspension of polyethylene particles is transferred into the next polymerization reactor of the reactor cascade.

In some embodiments, the reactor cascade comprises at least 3 polymerization reactors and the suspension of polyethylene particles withdrawn from the second polymerization reactor is fed into a separator, in which a part of the suspension medium is separated from the suspension and recycled to the second polymerization reactor and a concentrated suspension of polyethylene particles is transferred into the third polymerization reactor.

In some embodiments, the present disclosure provides an apparatus for polymerizing olefinic monomers in suspension in a reactor cascade comprising:
- at least two serially connected polymerization reactors forming a reactor cascade,
- a separator for separating the suspension in polyolefin particles and a recovered suspension medium,
- transfer lines for transferring a suspension of polyolefin particles in a suspension medium from one polymerization reactor of the reactor cascade to the next polymerization reactor of the reactor cascade and from the last polymerization reactor of the reactor cascade to the separator, and
- a recycle line for recycling parts of the recovered suspension medium to the first polymerization reactor of the reactor cascade,
wherein the recycle line for recycling parts of the recovered suspension medium to the first polymerization reactor of the reactor cascade is equipped with a catalytic hydrogenation unit.

In some embodiments of the apparatus, the transfer line for transferring the suspension of polyolefin particles from the first polymerization reactor of the reactor cascade to the next polymerization reactor of the reactor cascade is equipped with a separator for separating a part of the suspension medium from the suspension transferred from the first polymerization reactor of the reactor cascade to the next polymerization reactor of the reactor cascade and the apparatus further comprises a recycle line for recycling the suspension medium separated from the suspension in the separator installed between the first polymerization reactor of the reactor cascade and the next polymerization reactor of the reactor cascade to the first polymerization reactor of the reactor cascade.

### BRIEF DESCRIPTION OF THE DRAWINGS

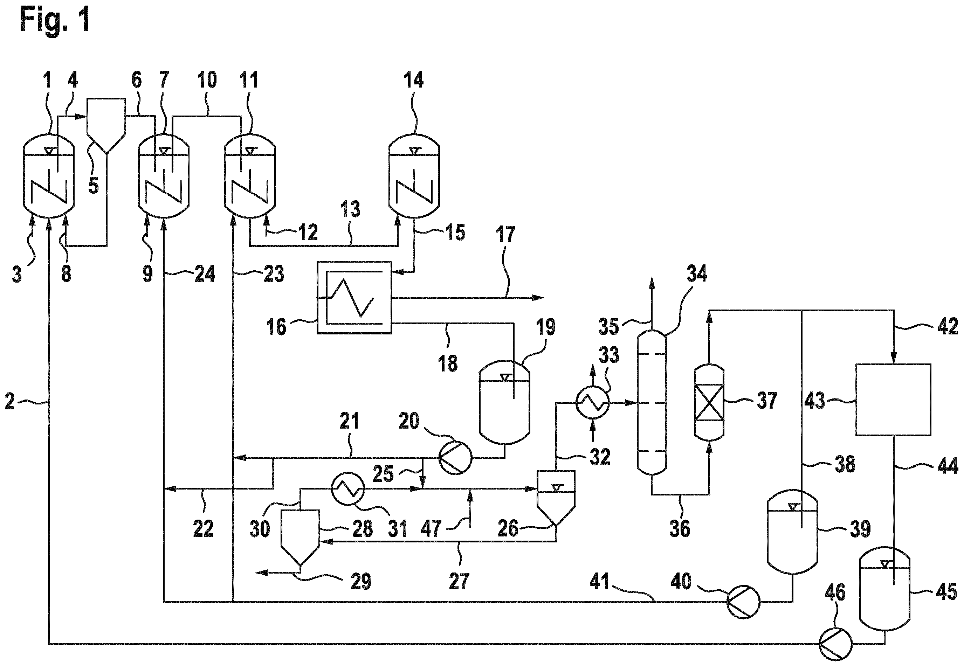

Figure 1 shows schematically a set-up for preparing multimodal ethylene copolymers according to the process of the present disclosure

### DETAILED DESCRIPTION OF THE INVENTION

The present disclosure provides a process for preparing a multimodal ethylene copolymer in suspension in a reactor cascade. The term "multimodal" hereby refers to the modality of the obtained ethylene copolymer and indicates that the ethylene copolymer comprises at least two fractions of polymer which are obtained under different reaction conditions, independently whether this modality can be recognized as separated maxima in a gel permeation chromatography (GPC) curve or not. The different polymerization conditions can, for example, be achieved by using different hydrogen concentrations and/or by using different comonomer concentrations in different polymerization reactors. The term "multimodal" as used herein shall include also "bimodal".

The ethylene copolymers are prepared by polymerizing ethylene and one or more C₃-C₁₂-1-alkenes in the presence of a polymerization catalyst. The C₃-C₁₂-1-alkenes may be linear or branched. Preferred C₃-C₁₂-1-alkenes are linear C₃-C₁₀-1-alkenes such as propylene, 1-butene, 1-pentene, 1-hexene, 1-heptene, 1-octene, or 1-decene or branched C₂-C₁₀-1-alkenes such as 4-methyl-1-penten. It is also possible to polymerize ethylene with mixtures of two or more C₃-C₁₂-1-alkenes. Preferred comonomers are C₃-C₈-1-alkenes, in particular 1-butene, 1-pentene, 1-hexene, 1-heptene and/or 1-octene. The amount of units in the prepared multimodal ethylene copolymers which are derived from incorporated comonomers are preferably from 0.01 wt.% to 25 wt.%, more preferably from 0.05 wt.% to 15 wt.% and in particular from 0.1 wt.% to 12 wt.%. Particular preference is given to processes in which ethylene is copolymerized with from 0.1 wt.% to 12 wt.% of 1-hexene and/or 1-butene and especially from 0.1 wt.% to 12 wt.% of 1-hexene.

In a preferred embodiment of the present disclosure, the multimodal ethylene copolymer is an ethylene-1-hexene copolymer, i.e. is an ethylene copolymer which has been obtained by copolymerizing ethylene as main monomer and 1-hexene as comonomer.

In another preferred embodiment of the present disclosure, the multimodal ethylene copolymer comprises at least two comonomer, i.e. the multimodal ethylene copolymer is a terpolymer or a copolymer comprising more than two kinds of comonomers. Especially preferred ethylene copolymers comprise at least 1-hexene and 1-butene as comonomers.

The polymerization can be carried out using all customary olefin polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally an electron donor compound and/or a particulate inorganic oxide as a support material.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

The process of the present disclosure comprises a polymerization which takes place in a medium, the so-called suspension medium, which is in liquid or in supercritical state under the conditions in the respective polymerization reactor and in which the produced ethylene polymer is insoluble and forms solid particles. The solids content of the suspension is generally in the range of from 10 to 80 wt. %, preferably in the range of from 20 to 40 wt. %.

The suspension medium, which forms the liquid or supercritical phase of the suspension, commonly comprises as main component a diluent but also comprises further components like, for example, dissolved monomers or comonomers, dissolved cocatalysts or scavengers like aluminum alkyls, dissolved reaction auxiliaries like hydrogen or dissolved reaction products of the polymerization reaction like oligomers or waxes. Suitable diluents should be inert, i.e. should not decompose under reaction conditions. Such diluents are for example hydrocarbons having from 3 to 12 carbon atoms, and in particular saturated hydrocarbons like isobutane, butane, propane, isopentane, pentane, hexane or octane, or a mixture of these. In a preferred embodiment, the diluent is a hydrocarbon mixture. For producing hydrocarbon mixtures from a raw material, a less high demand for separating the components of the raw material is required than for producing a specific hydrocarbon, and accordingly hydrocarbon mixtures are economically more attractive as diluent, but show the same diluent performance as specific hydrocarbons. However, hydrocarbon mixtures may have a boiling point range.

When carrying out an ethylene copolymerization with a comonomer, which has a boiling point which is close to the boiling point of the diluent or which is within a boiling point range of the diluent, a separation of the comonomer from the diluent by evaporation or distillation is not economically possible. When using a mixture of components as diluent, this could even imply that a separation of the diluent in higher-boiling components and lower-boiling components is needed. Accordingly, the process of the present disclosure is especially suitable when the boiling points of the diluent and of one of the comonomers are close or overlap because the process allows recycling diluent to a polymerization reactor, in which an ethylene homopolymerization is carried out, without separating the comonomer from the diluent.

Thus, in a preferred embodiment of the present disclosure, the difference between the normal boiling point of one of the comonomers fed to the reactor cascade and the normal boiling point of the diluent or, if the diluent is a mixture of components, the difference the between the normal boiling point of one of the comonomers fed to the reactor cascade and the initial normal boiling point or the final normal boiling point of the diluent is not more than 15°C, preferably not more than 10°C, and in particular not more than 6°C, where the normal boiling points are defined as boiling points at 1013,25 hPa.

The process of the present disclosure can be carried out using all industrially known suspension polymerization processes at temperatures in the range from 40 to 150°C, preferably from 50 to 130°C and particularly preferably from 60 to 90°C, and under pressures of from 0.1 to 20 MPa and particularly preferably from 0.3 to 5 MPa. Processes of this type are generally known to those skilled in the art.

The process of the present disclosure is carried out in a reactor cascade of at least two polymerization reactors which are connected in series. The reactor cascade comprises a first polymerization reactor and one or more subsequent polymerization reactors. These reactors are not restricted to any specific design, preferably these reactors are however loop reactors or stirred tank reactors. It is possible that the process of the present invention is only carried out in a cascade of two reactors, a first polymerization reactor and a second polymerization reactor as a subsequent reactor. It is however also possible that there are two or more subsequent polymerization reactors arranged downstream of the first polymerization reactor. Preferably, different polymerization conditions are established in each of the polymerization reactors. The reactor cascade may also comprise one are more additional polymerization reactors such as prepolymerization reactors upstream of the first polymerization reactor.

In a preferred embodiment of the process of the present disclosure, ethylene homopolymer is prepared in the first polymerization reactor and a copolymer of ethylene is prepared in a subsequent polymerization reactor. To be able to prepare an ethylene homopolymer in the first polymerization reactor, no comonomer is fed to the first polymerization reactor, neither directly nor as component of a feed stream or a recycle stream which is introduced into the first polymerization reactor of the reactor cascade. If the reactor cascade comprises one are more prepolymerization reactors, the prepolymerization is preferably carried without adding comonomers.

The polymerization reactors of the process of the present disclosure are preferably single reactors. It is however also possible, especially for the first polymerization reactor, to have two or more reactors, arranged in parallel or in series, to operate under identical conditions or under substantially identical conditions and to act as the first polymerization reactor of the process of the present disclosure.

In a preferred embodiment of the present disclosure, the multimodal ethylene copolymer of the present disclosure is prepared in a cascade of a first reactor and one subsequent polymerization reactor, wherein the polyethylene prepared in the first polymerization reactor is an ethylene homopolymer, preferably a low molecular weight ethylene homopolymer, and the polyethylene prepared in the subsequent polymerization reactor is an ethylene copolymer, preferably a high molecular weight copolymer. The so obtained multimodal ethylene copolymers preferably comprise from 35 to 65 % by weight of ethylene homopolymer prepared in the first polymerization reactor and from 35 to 65 % by weight of ethylene copolymer prepared in the subsequent polymerization reactor.

In another preferred embodiment of the present disclosure, the multimodal ethylene copolymer of the present disclosure is prepared in a cascade of three polymerization reactors, i.e. in a first polymerization reactor and two subsequent polymerization reactors, wherein the polyethylene prepared in the first polymerization reactor is an ethylene homopolymer, preferably a low molecular weight ethylene homopolymer, the polyethylene prepared in one of the subsequent polymerization reactors is an ethylene copolymer, preferably a high molecular weight copolymer, and the polyethylene prepared in the other subsequent polymerization reactor is an ethylene copolymer of a higher molecular weight, preferably an ultrahigh molecular weight copolymer. The so obtained multimodal ethylene copolymers preferably comprise from 30 to 60 % by weight, more preferably from 45 to 55 % by weight of ethylene homopolymer prepared in the first polymerization reactor, from 30 to 65 % by weight, more preferably from 20 to 40 % by weight of ethylene copolymer prepared in one subsequent polymerization reactor, and from 1 to 30 % by weight, more preferably from 15 to 30 % by weight of higher molecular weight ethylene copolymer prepared in the other subsequent polymerization reactor.

In the process of the present disclosure, the suspension of multimodal ethylene copolymer particles formed in the reactor cascade is transferred into a separator, in which the multimodal ethylene copolymer particles are separated from the suspension medium. This separation into multimodal ethylene copolymer particles and recovered suspension medium can be carried out in all suitable separation apparatuses such as centrifuges, decanters, filters or combinations thereof. Preferably, the separator is a centrifuge. In a preferred embodiment of the present disclosure, the suspension withdrawn from the reactor cascade is first transferred into a separator feed vessel and conveyed from the separator feed vessel to the separator.

Typically, the recovered suspension medium comprises more than 80 wt. % of diluent. Further components of the recovered suspension medium are ethylene, comonomers, aluminum alkyls, and hydrogen and dissolved reaction products like oligomers and waxes.

Preferably, most of the recovered suspension medium is recycled to the reactor cascade. Preferably, all polymerization reactors of the reactor cascade are provided with recycled parts of the recovered suspension medium. Preferably, from 90 to 99.99 wt.-%, more preferably from 95 to 99,5 wt.-%, and in particular from 98 to 99 wt.-% of the recovered suspension medium are recycled to the reactor cascade. The parts of the recovered suspension medium which are not recycled to the reactor cascade include, for example, continuous flushings of pumps, off-gas which may be vented to purge gaseous impurities of the feed streams or gaseous by-products of the polymerization process or dissolved reaction products like waxes which are intentionally removed from the recovered suspension medium.

The recovered suspension medium is preferably first fed to a suspension medium collecting vessel and, for being recycled to the polymerization reactors of the reactor cascade, the recovered suspension medium is withdrawn from the suspension medium collecting vessel.

The multimodal ethylene copolymer particles obtained in the separator are commonly still wet and have preferably a content of suspension medium in the range from 15 wt.-% to 40 wt.-% and more preferably from 20 wt.-% to 35 wt.-%. The separated multimodal ethylene copolymer particles are accordingly preferably fed to a two-stage drying section in which residual suspension medium is stripped from the multimodal ethylene copolymer particles with hot nitrogen in closed loops. The dried multimodal ethylene copolymer particles are preferably pneumatically conveyed to an extrusion section in which suitable amounts of additives are added and the mixture is molten, homogenized and pelletized. Preferably, most of the components of the suspension medium which are separated from the multimodal ethylene copolymer particles in the drying process are collected and recycled to the reactor cascade.

In the process of the present disclosure, a part of the recovered suspension medium is purified in a purification section for producing purified components of the recovered suspension medium. Purification in the context of the present disclosure means that a composition is separated in one or more separated compositions or that one or more components of a composition are removed from the composition and a purified composition void of or at least substantially depleted in the removed component(s) is obtained. A purification can however even go so far that individual components of the composition are isolated. Such a purification process can, for example, include removing components of the recovered suspension medium, which have significantly lower boiling point than the diluent, from the recovered suspension medium, and/or removing components of the suspension medium, which have significantly higher boiling point than the diluent, for example oligomers or waxes, from the recovered suspension medium. The amount of recovered suspension medium which passes the purification section is preferably from 1 to 90 wt.-%, more preferably from 5 to 80 wt.-% of the recovered suspension medium recycled to the reactor cascade. In a preferred embodiment of the purification process, the recovered suspension medium is separated in two or more components which are recycled to the reactor cascade in individual recycle circuits. After the separation, each of the individual recycle circuits may comprise further purification steps. Components of the recovered suspension medium, which may be recycled to the reactor cascade in individual recycle circuits, can be, besides the diluent, ethylene and comonomers. The purified components of the recovered suspension medium can be transferred to any of the reactors of the reactor cascade.

Preferably, the process for producing the purified components of the recovered suspension medium includes a step of evaporating a part of the recovered suspension medium and then re-condensing the evaporated part of the suspension medium. Typically, the evaporated part of the recovered suspension medium comprises ethylene, hydrogen, those comonomers, which have a lower or a similar boiling point than the used diluent, and parts of the diluent. This means, when, for example, n-hexane or a mixture of hexane isomers is used as diluent and 1-butene is used as comonomer, the majority of the 1-butene comprised in the recovered suspension medium forms a part of the evaporated part of the suspension medium. Preferably, most of the evaporated part of the recovered suspension medium is recycled to one or more of the polymerizations reactors in individual recycle circuits, most preferably after having passed one or more further purification steps.

In a particularly preferred embodiment of the present disclosure, the process for producing the purified components of the recovered suspension medium includes a distillation step. Preferably, the lower boiling point component obtained by the distillation comprises ethylene, hydrogen, those comonomers, which have a lower or a similar boiling point than the used diluent, and parts of the diluent. That means, when, for example, n-hexane or a mixture of hexane isomers is used as diluent and 1-butene is used as comonomer, the majority of the 1-butene comprised in the recovered suspension medium forms a part of the lower boiling point component obtained by the distillation. Preferably, most of the lower boiling point component obtained by the distillation is recycled to one or more of the polymerizations reactors in individual recycle circuits, most preferably after having passed one or more further purification steps.

Preferably, the higher boiling point component obtained by the distillation comprises the majority of the diluent and those comonomers, which have a boiling point similar to or higher than that of the used diluent. Preferably, most of the higher boiling point component obtained by the distillation is recycled to one or more of the polymerizations reactors, most preferably after having passed one or more further purification steps.

Preferably, the process for producing the purified components of the recovered suspension medium in the purification section includes a step of wax removal. Wax withdrawn from the polymerization process may be combusted for generating energy or may be sold as by-product of the polymerization process.

The process for producing the purified components of the recovered suspension medium may further comprise additional purification steps, such as, for example, a purification by adsorption, a purification by absorption, or a purification by a membrane purification process.

In the process of the present disclosure, at least some or a part of the purified components of the recovered suspension medium are recycled to the first polymerization reactor of the reactor cascade. Components of the recovered suspension medium which are preferably recycled to the first polymerization reactor of the reactor cascade are diluent and ethylene. These components are preferably recycled in individual recycle circuits.

Preferably, from 5 to 70 wt.-% of the recovered suspension medium are recycled as purified components of the recovered suspension medium to the first polymerization reactor of the reactor cascade, more preferably from 10 to 60 wt.-% and in particular from 15 to 50 wt.-% of the recovered suspension medium are recycled to the first polymerization reactor of the reactor cascade.

According to the process of the present disclosure, the purified components of the recovered suspension medium recycled to the first polymerization reactor, which comprise the diluent, undergo a catalytic hydrogenation before being introduced into the first polymerization reactor. A catalytic hydrogenation is a chemical reaction in which unsaturated chemical compound are reacted with hydrogen in the presence of a hydrogenation catalyst. Unsaturated chemical compounds which may be comprised in the suspension medium to be recycled to the first polymerization reactor can be various chemical compounds which are introduced into the reactor cascade as impurities of the feed streams or which have been formed in side reactions of the polymerization process. However, the major parts of the unsaturated chemical compounds, which are hydrogenated according to the present disclosure, are remaining ethylene and, predominantly, the comonomer or the comonomers.

The catalytic hydrogenation can be carried out in liquid phase or in gas-phase and is preferably performed in liquid phase.

As hydrogenation catalysts, use can be made of the catalysts customary for hydrogenation, for example catalysts based on platinum, palladium, rhodium or transition metals such as molybdenum, tungsten, chromium or iron, cobalt, copper and nickel, which can be used either individually or in admixture, generally applied to supports such as activated carbon, ceramics, etc. The hydrogenation is usually carried out at from 50 to 300°C, preferably from 100 to 250°C.

Examples of hydrogenation catalysts for hydrogenations in the gas phase are platinum- or palladium-based compositions, particularly preferred is platinum or palladium on alumina. Examples of hydrogenation catalysts for method hydrogenations in the liquid phase are cobalt- or nickel-based catalysts activated by trialkylaluminiums, such as cobalt(acetylacetonate) or nickel(octanoate); rhodium catalysts such as Wilkinson's catalyst (Rh(PPh₃)₃Cl); ruthenium catalysts, such as Ru(H)Cl(PPh₃)₃. Alternatively, heterogeneous platinum, platinum oxide or palladium catalysts may be used as a suspension in the reaction medium. Hydrogenation catalysts which can be used for methods 1) and 2) are described in "Catalytic Hydrogenation" (R.L. Augustine, publisher Dekker, New York, 1965) and in "Advanced Organic Chemistry", 4 th Edition, p. 771-780 (J. March, publisher Wiley, New York, 1992).

In a preferred embodiment of the present disclosure, a part of the recovered suspension medium is directly recycled to a subsequent polymerization reactor. Preferably, all subsequent polymerization reactors of the reactor cascade are provided with directly recycled parts of the recovered suspension medium. That means, parts of the recovered suspension medium are preferably recycled to the second and the optional further subsequent polymerization reactors still comprising, besides the diluent, non-reacted ethylene and comonomers, cocatalysts or scavengers like aluminum alkyls, dissolved reaction auxiliaries like hydrogen and dissolved reaction products of the polymerization reaction like oligomers or waxes. Directly recycling of the separated suspension medium saves the efforts of working-up the materials and enables reuse of contained cocatalyst and comonomer or comonomers, thus reducing the overall operational costs. Preferably, from 10 to 99 wt.-% and more preferably from 20 to 95 wt.-% of the recovered suspension medium are directly recycled to the reactor cascade.

Preferably, fresh diluent which is introduced into the reactor cascade for replacing losses of diluent is not directly fed into one of the polymerization reactors but fed into a component of the purification section or added to the part of the recovered suspension medium which is transferred into the purification section.

The process of the present disclosure allows producing multimodal ethylene copolymers having a good combinations of product properties and processability in a reactor cascade under economically favorable conditions because the recovered suspension medium recycled to the first polymerization reactor of the reactor cascade is free of comonomers and it is so possible to produce an ethylene homopolymer in the first polymerization reactor and nonetheless use recycled components of the suspension medium to form major parts of the suspension medium in the first polymerization reactor.

In a preferred embodiment of the present disclosure, the suspension of polyethylene particles withdrawn from the first polymerization reactor of the reactor cascade is fed into a separator, in which a part of the suspension medium is separated from the suspension and recycled to the first polymerization reactor of the reactor cascade and a concentrated suspension of polyethylene particles is transferred into the next polymerization reactor of the reactor cascade. Suitable separators for separating a part of the suspension medium from the suspension withdrawn from the first polymerization reactor may be centrifuges, filters, cyclones, concentrators (thickeners) or combinations thereof. By recycling a part of the suspension medium of the suspension withdrawn from the first polymerization reactor directly back to the first polymerization reactor, the amount of hydrogenated components of the recovered suspension medium which are needed to replace the suspension withdrawn from the first polymerization reactor is reduced and accordingly operational costs for such a process are reduced.

In another preferred embodiment of the present disclosure, the reactor cascade comprises at least three polymerization reactors and not only the suspension transferred from the first polymerization reactor to the second polymerization reactor passes a separator but also the suspension transferred from the second polymerization reactor to the third polymerization reactor passes a separator. By recycling a part of the suspension medium of the suspension withdrawn from the second polymerization reactor directly back to the second polymerization reactor, the amount of suspension medium transferred from the second to the third polymerization reactor is minimized and accordingly the amount of transferred comonomer from the second to the third polymerization reactor is minimized. Such an approach is preferable for using different comonomers in the second and the third polymerization reactor or for using comonomer mixtures of a different composition in the second and the third polymerization reactor. An example thereof could be using primarily 1-butene as comonomer in the second polymerization reactor and using primarily 1-hexene as comonomer in the third polymerization reactor, or vice versa.

Figure 1 shows schematically a set-up for preparing multimodal ethylene copolymers according to the process of the present disclosure in which the polymerization takes place in a cascade of three reactors.

For polymerizing the olefins in a first polymerization reactor (1) in suspension, recycled purified components of a recovered suspension medium are fed to the reactor (1) via feeding line (2). The other components of the reaction mixture like catalyst, ethylene, possible comonomers and polymerization auxiliaries are fed to the reactor via one or more feeding lines (3). As result of the polymerization in reactor (1), a suspension of solid polyethylene particles in a suspension medium is formed. This suspension is fed via line (4) to a separator (5) in which the suspension formed in reactor (1) is separated into a concentrated suspension, which is transferred via line (6) into a second polymerization reactor (7), and a liquid suspension medium which is recycled to the first polymerization reactor (1) via line (8).

Within polymerization reactor (7), further polymerization occurs. Directly recycled recovered suspension medium is fed to reactor (7) via lines (21), (22) and (24) and recycled purified components of the recovered suspension medium can be fed to reactor (7) via lines (41) and (24). Fresh ethylene, comonomer or further components of the reaction mixture can be fed to reactor (7) via one or more feeding lines (9). The suspension of reactor (7) is thereafter fed via line (10) to a third polymerization reactor (11) in which additional polymerization is carried out. Directly recycled recovered suspension medium is fed to reactor (11) via lines (21) and (23) and recycled purified components of the recovered suspension medium can be fed to reactor (11) via lines (41) and (22). One or more feeding lines (12) allow supplementary feeding of ethylene, comonomer or further components of the reaction mixture to reactor (11).

The suspension of solid multimodal ethylene copolymer particles formed in reactor (11) is continuously transferred via line (13) to a separator feed vessel (14). The suspension is then passed via line (15) to centrifuge (16), where suspension is separated in solid multimodal ethylene copolymer particles and recovered liquid suspension medium. The isolated multimodal ethylene copolymer particles are conducted via line (17) to a dryer (not shown) and thereafter to a pelletizing unit (not shown).

The recovered suspension medium is transferred via line (18) to a suspension medium collecting vessel (19). From there, the recovered suspension medium can be recycled by means of pump (20) via lines (21) and (22) and lines (23) and (24) to polymerization reactor (7) and/or polymerization reactor (11).

A part of the recovered suspension medium is branched off line (21) and transferred via line (25) to a purification section comprising an evaporator (26), a distillation column (34), and an adsorber unit (37). The recovered suspension medium branched off through line (21) is conveyed into evaporator (26). Higher boiling point fractions of the recovered suspension medium are withdrawn from the bottom of evaporator (26) via line (27) and transferred to a wax separator vessel (28). Liquid wax is withdrawn from the bottom of wax separator vessel (28) via line (29) and conveyed to an incineration unit (not shown), e.g. for generation of steam, or to a solidifying unit (not shown) for being sold. A gaseous fraction is withdrawn from the top of wax separator vessel (28) via line (30), passed through heat exchanger (31) for being condensed and send via line (25) to back to evaporator (26).

The fractions of the recovered suspension medium evaporated in evaporator (26) are withdrawn from the top of evaporator (26) via line (32), passed through heat exchanger (33) for being condensed and transferred into a distillation column (34). Low boiling point components are withdrawn from the top of distillation column (34) via line (35). When operating the polymerization in reactors (1), (7) and (11) with 1-butene as comonomer, 1-butene is withdrawn via line (35) and transferred into a 1-butene recovery unit (not shown) for purifying the 1-butene and recycling the 1-butene to one or more of the polymerization reactors of the reactor cascade.

The bottom stream of distillation column (34) is transferred via line (36) to an adsorber unit (37) to remove polar impurities. After having passed the adsorber unit (37), the part of the bottom stream to be recycled to the polymerization reactors (7) and (11) is transferred via line (38) to a bottom stream collecting vessel (39). From there, the bottom stream is recycled by means of pump (40) via line (41) and lines (23) and (24) to polymerization reactor (7) and/or polymerization reactor (11).

The part of the bottom stream to be recycled to the first polymerization reactor (1), is transferred, after having passed the adsorber unit (37), via line (42) to a catalytic hydrogenation unit (43). The hydrogenated bottom stream is transferred via line (44) to a hydrogenated bottom stream collecting vessel (45). From there, the hydrogenated bottom stream is recycled by means of pump (46) via line (2) to the first polymerization reactor (1).

For replacing losses of diluent, for example by discharging diluent together with the multimodal ethylene copolymer particles and not fully recovering the diluent in the drying process of the multimodal ethylene copolymer particles, fresh diluent is fed to the purification section via line (47).

The present disclosure further provides an apparatus for polymerizing olefinic monomers in suspension in a reactor cascade comprising:
- at least two serially connected polymerization reactors forming a reactor cascade,
- a separator for separating the suspension in polyolefin particles and a recovered suspension medium,
- transfer lines for transferring a suspension of polyolefin particles in a suspension medium from one polymerization reactor of the reactor cascade to the next polymerization reactor of the reactor cascade and from the last polymerization reactor of the reactor cascade to the separator, and
- a recycle line for recycling parts of the recovered suspension medium to the first polymerization reactor of the reactor cascade,
wherein the recycle line for recycling parts of the recovered suspension medium to the first polymerization reactor of the reactor cascade is equipped with a catalytic hydrogenation unit.

Preferably, the transfer line for transferring the suspension of polyolefin particles from the first polymerization reactor of the reactor cascade to the next polymerization reactor of the reactor cascade is equipped with a separator for separating a part of the suspension medium from the suspension transferred from the first polymerization reactor of the reactor cascade to the next polymerization reactor of the reactor cascade and the apparatus further comprises a recycle line for recycling the suspension medium separated from the suspension in the separator installed between the first polymerization reactor of the reactor cascade and the next polymerization reactor of the reactor cascade to the first polymerization reactor of the reactor cascade.

## Claims

1. A process for preparing a multimodal ethylene copolymer in suspension in a reactor cascade comprising a first polymerization reactor and one or more subsequent polymerization reactors comprising,
polymerizing, in the reactor cascade, ethylene and one or more C₃-C₁₂-1-alkenes at temperatures of from 40 to 150°C and pressures of from 0.1 to 20 MPa in the presence of a polymerization catalyst and forming a suspension of multimodal ethylene copolymer particles in a suspension medium comprising a diluent,
transferring the suspension of multimodal ethylene copolymer particles into a separator, in which the suspension is separated into multimodal ethylene copolymer particles and recovered suspension medium,
purifying a part of the recovered suspension medium in a purification section for producing purified components of the recovered suspension medium, and
recycling at least some or a part of the purified components of the recovered suspension medium to the first polymerization reactor of the reactor cascade,
wherein the purified components of the recovered suspension medium recycled to the first polymerization reactor, which comprise the diluent, undergo a catalytic hydrogenation before being introduced into the first polymerization reactor.

2. The process of claim 1, wherein the purified components of the recovered suspension medium, which are recycled to the first polymerization reactor, amount to from 5 to 70 wt.-% of the recovered suspension medium.

3. The process of claim 1 or 2, wherein an ethylene homopolymer is prepared in the first polymerization reactor and a copolymer of ethylene is prepared in a subsequent polymerization reactor.

4. The process of any of claims 1 to 3, wherein the difference between the normal boiling point of one of the comonomers fed to the reactor cascade and the normal boiling point of the diluent or, if the diluent is a mixture of components, the difference the between the normal boiling point of one of the comonomers fed to the reactor cascade and the initial normal boiling point or the final normal boiling point of the diluent is not more than 15°C, the normal boiling points being defined as boiling points at 1013,25 hPa.

5. The process of any of claims 1 to 4, wherein the multimodal ethylene copolymer is an ethylene-1-hexene copolymer.

6. The process of any of claims 1 to 4, wherein the multimodal ethylene copolymer comprises at least two comonomers.

7. The process of claim 6, wherein the multimodal ethylene copolymer comprises at least 1-hexene and 1-butene as comonomers.

8. The process of any of claims 1 to 7, wherein a part of the recovered suspension medium is directly recycled to a subsequent polymerization reactor.

9. The process of any of claims 1 to 8, wherein the process for producing the purified part of the recovered suspension medium includes a step of evaporating a part of the recovered suspension medium and then re-condensing the evaporated part of the suspension medium.

10. The process of any of claims 1 to 9, wherein the process for producing the purified part of the recovered suspension medium includes a distillation step.

11. The process of any of claims 1 to 10, wherein the process for producing the purified components of the recovered suspension medium includes a step of wax removal.

12. The process of any of claims 1 to 11, wherein the suspension of polyethylene particles withdrawn from the first polymerization reactor of the reactor cascade is fed into a separator, in which a part of the suspension medium is separated from the suspension and recycled to the first polymerization reactor of the reactor cascade and a concentrated suspension of polyethylene particles is transferred into the next polymerization reactor of the reactor cascade.

13. The process of any of claims 1 to 12, wherein the reactor cascade comprises at least 3 polymerization reactors and the suspension of polyethylene particles withdrawn from the second polymerization reactor is fed into a separator, in which a part of the suspension medium is separated from the suspension and recycled to the second polymerization reactor and a concentrated suspension of polyethylene particles is transferred into the third polymerization reactor.

14. An apparatus for polymerizing olefinic monomers in suspension in a reactor cascade comprising:
- at least two serially connected polymerization reactors forming a reactor cascade,
- a separator for separating the suspension in polyolefin particles and a recovered suspension medium,
- transfer lines for transferring a suspension of polyolefin particles in a suspension medium from one polymerization reactor of the reactor cascade to the next polymerization reactor of the reactor cascade and from the last polymerization reactor of the reactor cascade to the separator, and
- a recycle line for recycling parts of the recovered suspension medium to the first polymerization reactor of the reactor cascade,
wherein the recycle line for recycling parts of the recovered suspension medium to the first polymerization reactor of the reactor cascade is equipped with a catalytic hydrogenation unit.

15. The apparatus of claim 14, wherein the transfer line for transferring the suspension of polyolefin particles from the first polymerization reactor of the reactor cascade to the next polymerization reactor of the reactor cascade is equipped with a separator for separating a part of the suspension medium from the suspension transferred from the first polymerization reactor of the reactor cascade to the next polymerization reactor of the reactor cascade and the apparatus further comprises a recycle line for recycling the suspension medium separated from the suspension in the separator installed between the first polymerization reactor of the reactor cascade and the next polymerization reactor of the reactor cascade to the first polymerization reactor of the reactor cascade.

## Patentansprüche

1. Verfahren zur Herstellung eines multimodalen Ethylencopolymers in Suspension in einer Reaktorkaskade, die einen ersten Polymerisationsreaktor und einen oder mehrere nachfolgende Polymerisationsreaktoren umfasst, umfassend:
Polymerisieren von Ethylen und einem oder mehreren C₃- bis C₁₂-1-Alkenen bei Temperaturen von 40 bis 150 °C und Drücken von 0,1 bis 20 MPa in Gegenwart von Polymerisationskatalysator in der Reaktorkaskade, und Bilden einer Suspension aus multimodalen Ethylencopolymerpartikeln in einem Suspensionsmedium, das ein Verdünnungsmittel umfasst,
Transferieren der Suspension der multimodalen Ethylencopolymerpartikel in einen Separator, in welchem die Suspension in multimodale Ethylencopolymerpartikel und rückgewonnenes Suspensionsmedium getrennt wird,
Reinigen eines Teils des rückgewonnenen Suspensionsmediums in einem Reinigungsabschnitt, um gereinigte Komponenten des rückgewonnenen Suspensionsmediums zu produzieren, und
Recyceln von mindestens einigen oder einem Teil der gereinigten Komponenten des rückgewonnenen Suspensionsmediums in den ersten Polymerisationsreaktor der Reaktorkaskade,
wobei die gereinigten Komponenten des rückgewonnenen Suspensionsmediums, die in den ersten Polymerisationsreaktor recycelt werden, welche das Verdünnungsmittel umfassen, eine katalytische Hydrierung durchlaufen, bevor sie in den ersten Polymerisationsreaktor eingebracht werden.

2. Verfahren nach Anspruch 1, wobei die gereinigten Komponenten des rückgewonnenen Suspensionsmediums, die in den ersten Polymerisationsreaktor recycelt werden, in der Summe 5 bis 70 Gew.% des rückgewonnenen Suspensionsmediums ergeben.

3. Verfahren nach Anspruch 1 oder 2, wobei ein Ethylenhomopolymer in dem ersten Polymerisationsreaktor hergestellt wird und ein Copolymer von Ethylen in einem nachfolgenden Polymerisationsreaktor hergestellt wird.

4. Verfahren nach einem der Ansprüche 1 bis 3, wobei der Unterschied zwischen dem normalen Siedepunkt von einem der Comonomere, die in die Reaktorkaskade eingespeist werden, und dem normalen Siedepunkt des Verdünnungsmittels oder, falls das Verdünnungsmittel eine Mischung von Komponenten ist, der Unterschied zwischen dem normalen Siedepunkt von einem der Comonomere, die in die Reaktorkaskade eingespeist werden, und dem normalen Anfangssiedepunkt oder dem normalen Endsiedepunkt des Verdünnungsmittels nicht mehr als 15 °C beträgt, wobei die normalen Siedepunkte als Siedepunkte bei 1013,25 hPa definiert sind.

5. Verfahren nach einem der Ansprüche 1 bis 4, wobei das multimodale Ethylencopolymer ein Ethylen-l-Hexen-Copolymer ist.

6. Verfahren nach einem der Ansprüche 1 bis 4, wobei das multimodale Ethylencopolymer mindestens zwei Comonomere umfasst.

7. Verfahren nach Anspruch 6, wobei das multimodale Ethylencopolymer mindestens 1-Hexen und 1-Buten als Comonomere umfasst.

8. Verfahren nach einem der Ansprüche 1 bis 7, wobei ein Teil des rückgewonnenen Suspensionsmediums direkt in einen nachfolgenden Polymerisationsreaktor recycelt wird.

9. Verfahren nach einem der Ansprüche 1 bis 8, wobei das Verfahren zum Produzieren des gereinigten Teils des rückgewonnenen Suspensionsmediums einen Schritt des Verdampfens eines Teils des rückgewonnenen Suspensionsmediums und danach erneuten Kondensieren des verdampften Teils des Suspensionsmediums einschließt.

10. Verfahren nach einem der Ansprüche 1 bis 9, wobei das Verfahren zum Produzieren des gereinigten Teils des rückgewonnenen Suspensionsmediums einen Destillationsschritt einschließt.

11. Verfahren nach einem der Ansprüche 1 bis 10, wobei das Verfahren zum Produzieren der gereinigten Komponenten des rückgewonnenen Suspensionsmediums einen Schritt der Wachsabtrennung einschließt.

12. Verfahren nach einem der Ansprüche 1 bis 11, wobei die Suspension der Polyethylenpartikel, die aus dem ersten Polymerisationsreaktor der Reaktorkaskade abgezogen wird, in einen Separator eingespeist wird, in dem ein Teil des Suspensionsmediums von der Suspension getrennt und zu dem ersten Polymerisationsreaktor der Reaktorkaskade recycelt wird und eine konzentrierte Suspension von Polyethylenpartikeln in den nächsten Polymerisationsreaktor der Reaktorkaskade transferiert wird.

13. Verfahren nach einem der Ansprüche 1 bis 12, wobei die Reaktorkaskade mindestens 3 Polymerisationsreaktoren umfasst und die Suspension der Polyethylenpartikel, die aus dem zweiten Polymerisationsreaktor der Reaktorkaskade abgezogen wird, in einen Separator eingespeist wird, in dem ein Teil des Suspensionsmediums von der Suspension getrennt und in den zweiten Polymerisationsreaktor der Reaktorkaskade recycelt wird und eine konzentrierte Suspension von Polyethylenpartikeln in den dritten Polymerisationsreaktor transferiert wird.

14. Vorrichtung zum Polymerisieren von olefinischen Monomeren in Suspension in einer Reaktorkaskade, umfassend:
- mindestens zwei in Reihe verbundene Polymerisationsreaktoren, die eine Reaktorkaskade bilden,
- einen Separator zum Trennen der Suspension in Polyolefinpartikel und ein rückgewonnenes Suspensionsmedium,
- Transferleitungen zum Transferieren einer Suspension von Polyolefinpartikeln in einem Suspensionsmedium von einem Polymerisationsreaktor der Reaktorkaskade in den nächsten Polymerisationsreaktor der Reaktorkaskade und von dem letzten Polymerisationsreaktor der Reaktorkaskade in den Separator, und
- eine Recyclingleitung zum Recyceln von Teilen des rückgewonnenen Suspensionsmediums in den ersten Polymerisationsreaktor der Reaktorkaskade,
wobei die Recyclingleitung zum Recyceln von Teilen des rückgewonnenen Suspensionsmediums in den ersten Polymerisationsreaktor der Reaktorkaskade mit einer katalytischen Hydriereinheit ausgestattet ist.

15. Vorrichtung nach Anspruch 14, wobei die Transferleitung zum Transferieren der Suspension von Polyolefinpartikeln aus dem ersten Polymerisationsreaktor der Reaktorkaskade in den nächsten Polymerisationsreaktor der Reaktorkaskade mit einem Separator zum Abtrennen eines Teils des Suspensionsmediums von der Suspension, die von dem ersten Polymerisationsreaktor der Reaktorkaskade in den nächsten Polymerisationsreaktor der Reaktorkaskade transferiert wird, ausgestattet ist und wobei die Vorrichtung des Weiteren eine Recyclingleitung zum Recyceln des Suspensionsmediums, das aus der Suspension in dem Separator, der zwischen dem ersten Polymerisationsreaktor der Reaktorkaskade und dem nächsten Polymerisationsreaktor der Reaktorkaskade installiert ist, getrennt wird, in den ersten Polymerisationsreaktor der Reaktorkaskade umfasst.

## Revendications

1. Procédé de préparation d'un copolymère multimodal d'éthylène en suspension dans une cascade de réacteurs comprenant un premier réacteur de polymérisation et un ou plusieurs réacteurs de polymérisation subséquents comprenant :
la polymérisation, dans la cascade de réacteurs, d'éthylène et d'un ou de plusieurs 1-alcènes en C₃-C₁₂ à des températures de 40 à 150°C et à des pressions de 0,1 à 20 MPa en présence d'un catalyseur de polymérisation et la formation d'une suspension de particules de copolymère multimodal d'éthylène dans un milieu de suspension comprenant un diluant,
le transfert de la suspension de particules de copolymère multimodal d'éthylène dans un séparateur, dans lequel la suspension est séparée en particules de copolymère multimodal d'éthylène et en milieu de suspension récupéré,
la purification d'une partie du milieu de suspension récupéré dans une section de purification pour produire des constituants purifiés du milieu de suspension récupéré et
le recyclage d'au moins certains ou d'une partie des constituants purifiés du milieu de suspension récupéré vers le premier réacteur de polymérisation de la cascade de réacteurs,
les constituants purifiés du milieu de suspension récupéré recyclé vers le premier réacteur de polymérisation, qui comprennent le diluant, subissant une hydrogénation catalytique avant d'être introduits dans le premier réacteur de polymérisation.

2. Procédé selon la revendication 1, les constituants purifiés du milieu de suspension récupéré, qui sont recyclés vers le premier réacteur de polymérisation, présentant une quantité allant de 5 à 70 % en poids du milieu de suspension récupéré.

3. Procédé selon la revendication 1 ou 2, un homopolymère d'éthylène étant préparé dans le premier réacteur de polymérisation et un copolymère d'éthylène étant préparé dans un réacteur de polymérisation subséquent.

4. Procédé selon l'une quelconque des revendications 1 à 3, la différence entre le point d'ébullition normal de l'un des comonomères introduits dans la cascade de réacteurs et le point d'ébullition normal du diluant ou, si le diluant est un mélange de constituants, la différence entre le point d'ébullition normal de l'un des comonomères introduits dans la cascade de réacteurs et le point d'ébullition normal initial ou le point d'ébullition normal final du diluant n'étant pas supérieure à 15°C, les points d'ébullition normaux étant définis comme points d'ébullition à 1013,25 hPa.

5. Procédé selon l'une quelconque des revendications 1 à 4, le copolymère multimodal d'éthylène étant un copolymère d'éthylène-l-hexène.

6. Procédé selon l'une quelconque des revendications 1 à 4, le copolymère multimodal d'éthylène comprenant au moins deux comonomères.

7. Procédé selon la revendication 6, le copolymère multimodal d'éthylène comprenant au moins du 1-hexène et du 1-butène en tant que comonomères.

8. Procédé selon l'une quelconque des revendications 1 à 7, une partie du milieu de suspension récupéré étant directement recyclée vers un réacteur de polymérisation subséquent.

9. Procédé selon l'une quelconque des revendications 1 à 8, le procédé de production de la partie purifiée du milieu de suspension récupéré comprenant une étape d'évaporation d'une partie du milieu de suspension récupéré et ensuite de recondensation de la partie évaporée du milieu de suspension.

10. Procédé selon l'une quelconque des revendications 1 à 9, le procédé de production de la partie purifiée du milieu de suspension récupéré comprenant une étape de distillation.

11. Procédé selon l'une quelconque des revendications 1 à 10, le procédé de production des constituants purifiés du milieu de suspension récupéré comprenant une étape d'élimination de cire.

12. Procédé selon l'une quelconque des revendications 1 à 11, la suspension de particules de polyéthylène soutirée du premier réacteur de polymérisation de la cascade de réacteurs étant introduite dans un séparateur, dans lequel une partie du milieu de suspension est séparée de la suspension et recyclée vers le premier réacteur de polymérisation de la cascade de réacteurs et une suspension concentrée de particules de polyéthylène étant transférée dans le réacteur de polymérisation suivant de la cascade de réacteurs.

13. Procédé selon l'une quelconque des revendications 1 à 12, la cascade de réacteurs comprenant au moins 3 réacteurs de polymérisation et la suspension de particules de polyéthylène soutirée du deuxième réacteur de polymérisation étant introduite dans un séparateur, dans lequel une partie du milieu de suspension est séparée de la suspension et recyclée vers le deuxième réacteur de polymérisation et une suspension concentrée de particules de polyéthylène étant transférée dans le troisième réacteur de polymérisation.

14. Appareil de polymérisation de monomères oléfiniques en suspension dans une cascade de réacteurs comprenant :
- au moins deux réacteurs de polymérisation reliés en série formant une cascade de réacteurs,
- un séparateur pour séparer la suspension en particules polyoléfiniques et en milieu de suspension récupéré,
- des lignes de transfert pour transférer une suspension de particules polyoléfiniques dans un milieu de suspension depuis un réacteur de polymérisation de la cascade de réacteurs au réacteur de polymérisation suivant de la cascade de réacteurs et depuis le dernier réacteur de polymérisation de la cascade de réacteurs au séparateur et
- une ligne de recyclage pour recycler des parties du milieu de suspension récupéré vers le premier réacteur de polymérisation de la cascade de réacteurs,
la ligne de recyclage pour recycler des parties du milieu de suspension récupéré vers le premier réacteur de polymérisation de la cascade de réacteurs étant équipée d'une unité d'hydrogénation catalytique.

15. Appareil selon la revendication 14, la ligne de transfert pour transférer la suspension de particules polyoléfiniques depuis le premier réacteur de polymérisation de la cascade de réacteurs au réacteur de polymérisation suivant de la cascade de réacteurs étant équipée d'un séparateur pour séparer une partie du milieu de suspension de la suspension transférée depuis le premier réacteur de polymérisation de la cascade de réacteurs au réacteur de polymérisation suivant de la cascade de réacteurs et l'appareil comprenant en outre une ligne de recyclage pour recycler le milieu de suspension séparé de la suspension dans le séparateur installé entre le premier réacteur de polymérisation de la cascade de réacteurs et le réacteur de polymérisation suivant de la cascade de réacteurs vers le premier réacteur de polymérisation de la cascade de réacteurs.
